# EUROPÄISCHE PATENTSCHRIFT

(11) **EP 0 770 608 B1**
(45) Veröffentlichungstag und Bekanntmachung des Hinweises auf die Patenterteilung: **13.08.2003**
(21) Anmeldenummer: 96116471.2
(22) Anmeldetag: 15.10.1996
(51) Int. Cl.: C07D 307/34, C08G 65/16, C07D 307/26, C08F 8/14

(54) **Strahlungshärtung von Dihydrofuranderivaten**
Radiation curing of dihydrofuran derivatives
Durcissement par rayonnement de dérivés du dihydrofuranne

(30) Priorität: 23.10.1995 DE 19539294; 15.03.1996 DE 19610349
(43) Veröffentlichungstag der Anmeldung: 02.05.1997
(73) Patentinhaber: BASF AKTIENGESELLSCHAFT, 67056 Ludwigshafen (DE)
(72) Erfinder: Reich, Wolfgang, Dr., 67133 Maxdorf (DE); Schwalm, Reinhold, Dr., 67157 Wachenheim (DE); Beck, Erich, Dr., 68528 Ladenburg (DE); Häussling, Lukas, Dr., 67098 Bad Dürkheim (DE); Nuyken, Oskar, Prof. Dr., 81927 Muenchen (DE); Raether, Roman-Benedikt, 80993 Muenchen (DE)

(56) Entgegenhaltungen:
- EP-A- 0 076 158
- WO-A-97/35907
- US-A- 4 816 496
- DATABASE WPI Section Ch, Week 9404 Derwent Publications Ltd., London, GB; Class A26, AN 94-031872 XP002064514 & JP 05 339 373 A (HITACHI CHEM CO LTD) , 21.Dezember 1993
- CHEMICAL ABSTRACTS, vol. 66, no. 18, 1.Mai 1967 Columbus, Ohio, US; abstract no. 76462, NOVIKOV, S. N. ET AL: "Photopolymerization of monomers forming charge transfer complexes with each other" XP002064513 & VYSOKOMOL. SOEDIN., SER. B (1967), 9(1), 8-9 CODEN: VYSBAI, 1967,

## Beschreibung

Die Erfindung betrifft ein Verfahren zur Herstellung von Beschichtungen und Formkörpern durch Strahlungshärtung.

Die Strahlungshärtung von radikalisch oder kationisch polymerisierbaren Verbindungen ist allgemein bekannt. Besondere technische Bedeutung hat die Strahlungshärtung von Acrylatverbindungen erlangt. Bei Acrylatverbindungen besteht jedoch grundsätzlich das Problem, daß die Photopolymerisation durch Sauerstoff inhibiert wird.

Da bei der kationischen Photopolymerisation das Problem der Sauerstoffinhibierung nicht auftritt, könnten kationisch polymerisierbare Verbindungen eine Alternative zu den radikalisch polymerisierbaren Verbindungen sein. Gefordert ist jedoch eine zu den radikalisch polymerisierbaren Verbindungen, insbesondere den Acrylatverbindungen, vergleichbare Härtungsgeschwindigkeit und möglichst gleich gute anwendungstechnische Eigenschaften der erhaltenen Beschichtungen oder Formkörper.

In der EP-A-123 912 werden Dihydropyrane als kationisch polymerisierbare, cyclische Vinylether für die Strahlungshärtung beschrieben.

Die Härtungsgeschwindigkeit, d.h. die Reaktivität bei der Strahlungshärtung, ist jedoch noch völlig unzureichend.

Dihydrofurane und ihre thermische, kationische Polymerisation sind als solche bekannt, z.B. aus Polymer Bulletin 28, 117-122 (1992).

Aufgabe der vorliegenden Erfindung war daher ein Verfahren zur Herstellung von Beschichtungen oder Formkörpern durch Strahlungshärtung, wobei eine Sauerstoffinhibierung nicht oder kaum auftritt, die Reaktivität der eingesetzten Verbindungen möglichst hoch ist und die anwendungstechnischen Eigenschaften der erhaltenen Beschichtungen und Formkörper zufriedenstellend sind.

Demgemäß wurde ein Verfahren zur Herstellung von Beschichtungen oder Formkörpern durch Strahlungshärtung, dadurch gekennzeichnet, daß strahlungshärtbare Massen, welche 1 bis 100 Gew.-%, bezogen auf die Gesamtmenge der kationisch und gegebenenfalls polymerisierbaren Verbindungen, Verbindungen A) mit mindestens einem kationisch polymerisierbaren 2,3-Dihydrofurangrundkörper enthalten, mit energiereichem Licht bestrahlt werden, gefunden.

Gefunden wurden auch strahlungshärtbare Massen, welche sich für ein solches Verfahren eignen.

Bei den Verbindungen A) handelt es sich bevorzugt um Verbindungen mit 1 bis 6 kationisch polymerisierbaren 2,3-Dihydrofurangrundkörpern. Das Molgewicht der Verbindungen A) liegt vorzugsweise unter 5000 g/mol, besonders bevorzugt unter 1000 g/mol.

Höhermolekulare Verbindungen A) sind insbesondere durch Anbindung von 2,3-Dihydrofuran oder -Derivaten an Polymere durch polymeranaloge Reaktionen möglich.

Insbesonders geeignet sind auch Verbindungen A, die mindestens eine der folgenden Gruppierungen enthalten: 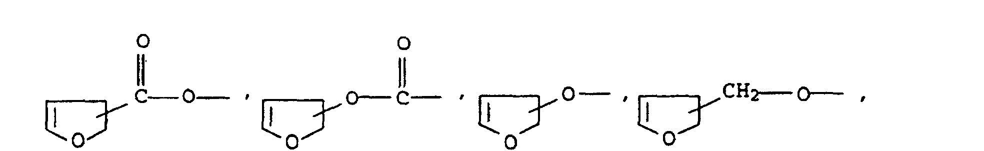 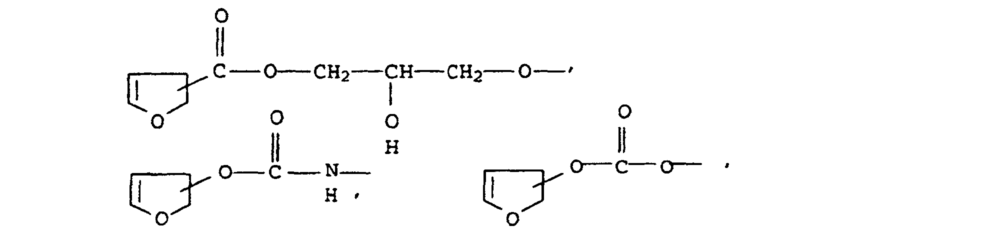 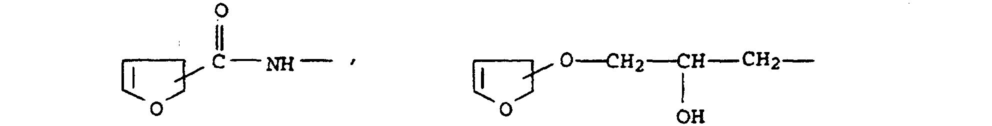 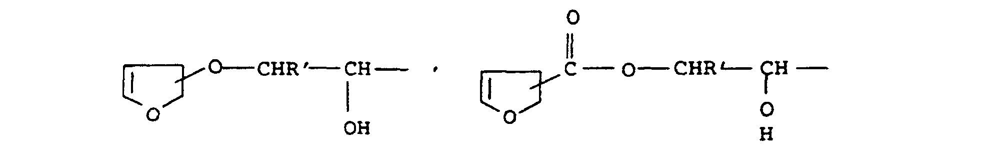 wobei R' folgende Bedeutung hat: H-Atom, organischer Rest mit 1 bis 20 C-Atomen, insbesondere ein C₁-C₂₀ aliphatischer Rest oder ein C₅-C₂₀ Aryl-, -Alkaryl- oder -Aralkylrest.

Als Verbindungen A) mit einem Dihydrofurangrundkörper kommen z.B. solche der Formel (I) 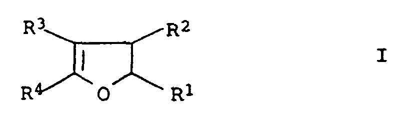 in Betracht.

Die einzelnen Reste können dabei unabhängig voneinander folgende Bedeutung haben:
- R¹, R²:: 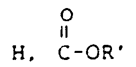 (R' = H-Atom, organischer Rest mit 1 bis 20 C-Atomen, insbesondere ein C₁-C₂₀-aliphatischer Rest oder ein C₅-C₂₀- Aryl-,-Alkaryl- oder -Aralkylrest) 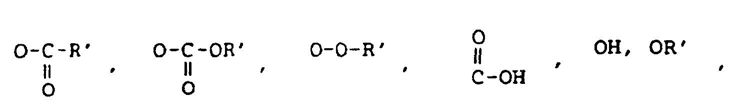 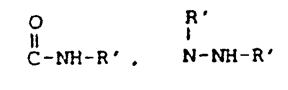 ein aromatischer oder aliphatischer Kohlenwasserstoffrest mit 1 bis 20 C-Atomen, welcher gegebenenfalls noch eine oder mehrere Carbonylgruppen oder Ethergruppen enthalten kann, gegebenenfalls durch eine oder mehrere Hydroxylgruppen substituiert sein kann oder eine, SiR'₃-Gruppe.
- R³:: H, C₁-C₂₀-Alkyl- oder C₁-C₂₀-Alkoxyrest
- R⁴:: H, C₁-C₂₀-Alkyl- oder C₅-C₂₀-Aryl-, -Aralkyl- oder -Alkarylrest, C₁-C₂₀-Hydroxyalkylrest,
oder R³ und R⁴, bzw. R¹ und R² zusammen einen Ring aus insgesamt 4 bis 5 Kohlenstoffatomen bilden (Ring-Atome des Dihydrofurangrundkörpers mitgezählt), welcher auch eine Ethergruppe als Ringbestandteil enthalten kann und gegebenenfalls durch Hydroxy-, Carbonsäure -oder Aminogruppen substituiert sein kann.

Bevorzugte Verbindungen der Formel I sind solche mit
- R¹, R²:: H, 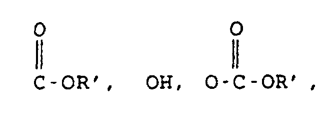 CH₂OH ein C₁-C₂₀ Hydroxyalkylrest oder ein C₁-C₂₀-Alkylrest oder ein C₅-C₁₀Arylrest
- R³:: H
- R⁴:: H, C₁-C₂₀-Alkyl- oder C₁-C₂₀ Hydroxyalkylrest.

Besonders bevorzugt stehen R¹, R³, R⁴ für H und R² hat eine der oben genannten Bedeutungen, insbesondere ist R² auch H, CH₂OH oder ein C₁-C₂₀ Alkylrest oder ein Phenylrest.

Als Beispiele für Verbindungen der Formel I werden folgende Strukturformeln aufgeführt:

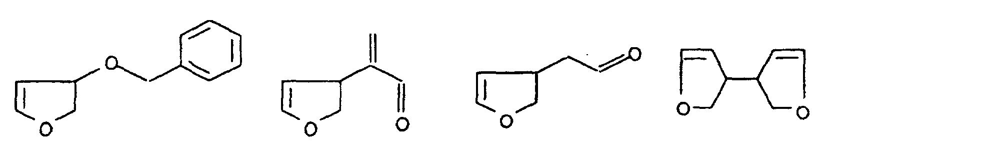

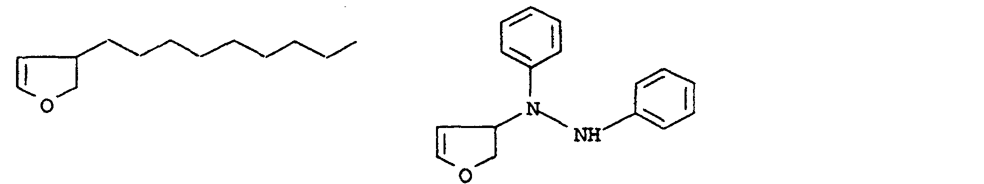

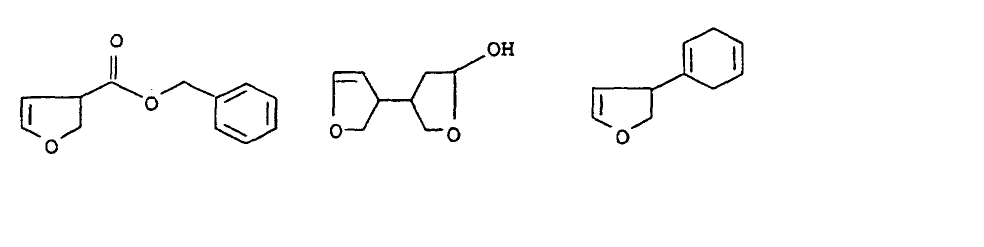

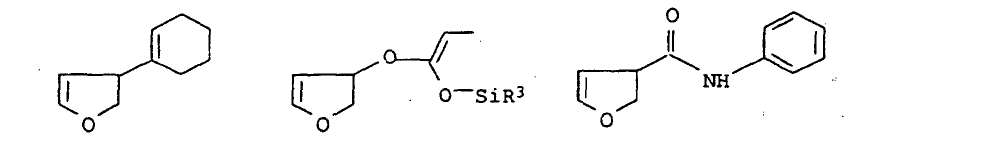

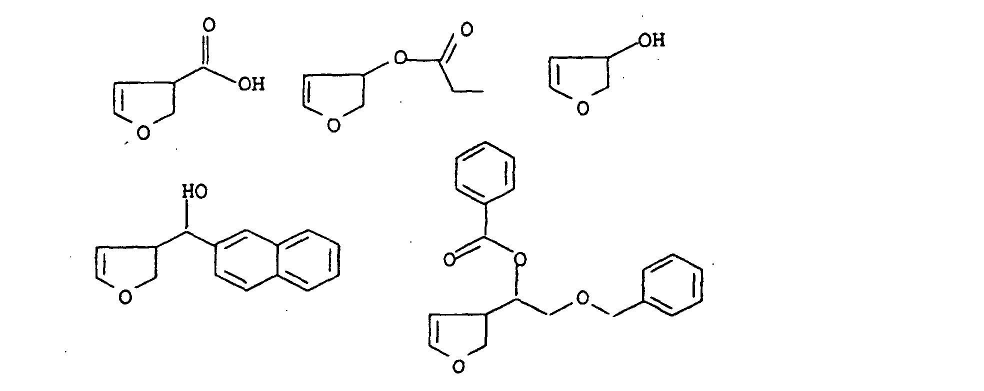

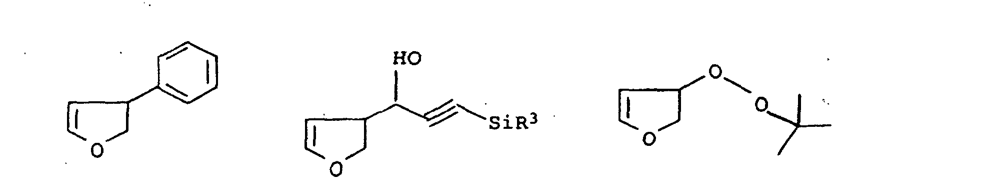

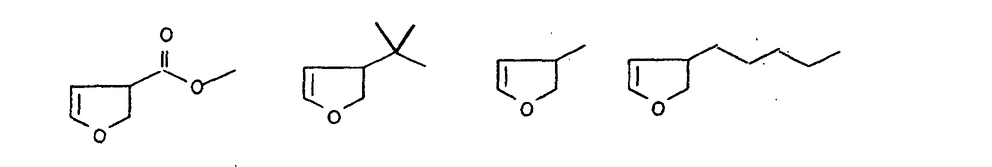

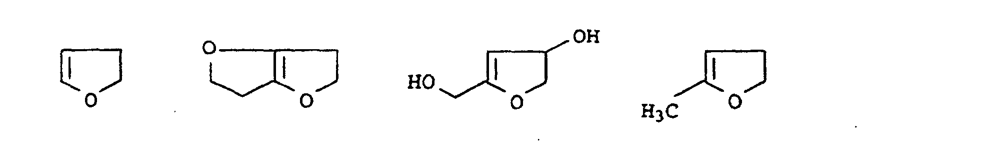

Insbesondere genannt seien auch Verbindungen I der Formel 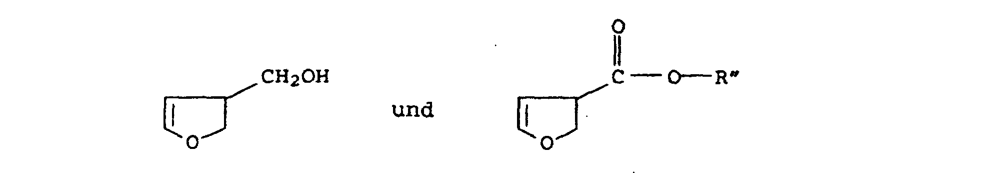 wobei R" ein Kohlenwasserstoffrest mit bis zu 20 C-Atomen, insbesondere ein C₁-C₁₀ Alkyl, ein Phenyl- oder Benzylrest ist.

Als Verbindungen A) mit mehreren 2,3-Dihydrofurangrundkörpern kommen z.B. solche der Formel 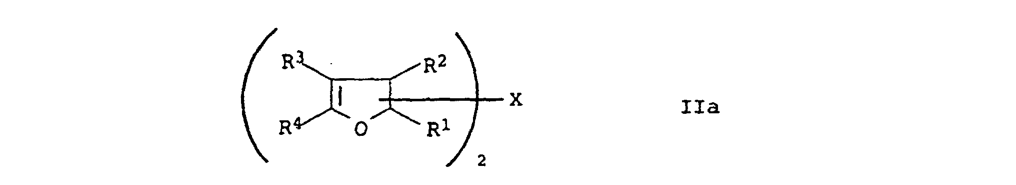 oder 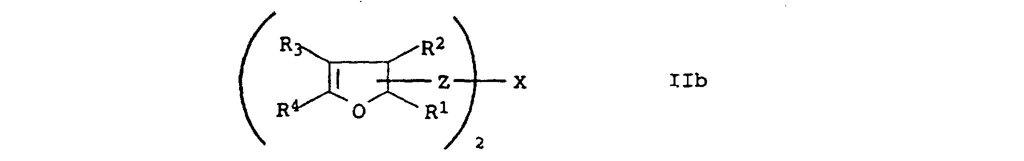 worin X für eine Einfachbindung oder eine zweibindige Gruppe steht, ausgewählt aus: 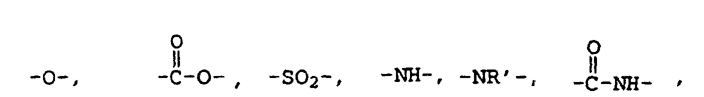 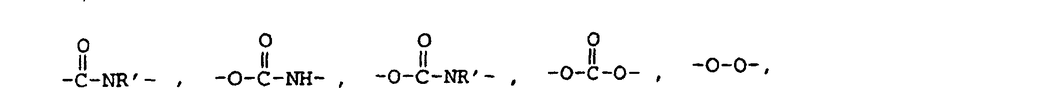 -CHR''-O- (mit R" = phenyl, naphthyl, -≡-SiR'₃) 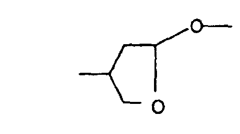 steht, worin weiterhin
Z für eine Einfachbindung, eine C₁-C₁₀ Alkylen- oder eine Phenylengruppe steht.
R¹ bis R⁴ und R' die oben genannte Bedeutung haben, aber einer der Reste R¹ bis R⁴ entfällt, (bevorzugt entfällt in den Verbindungen mit mehreren 2,3 Dihydrofurangrundköpern R²) und an dessen Stelle Z bzw. X tritt.

Im einfachsten Fall ist z.B. X und Z eine Einfachbindung, R¹, R³, R⁴ = H und R² entfällt, so daß sich folgende Strukturformel ergibt:

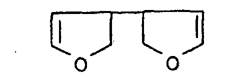

Als Verbindungen mit mehreren 2,3-Dihydrofurangrundkörpern kommen auch solche der Formel 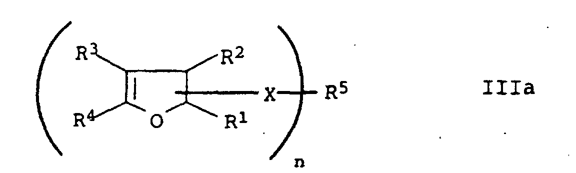 oder 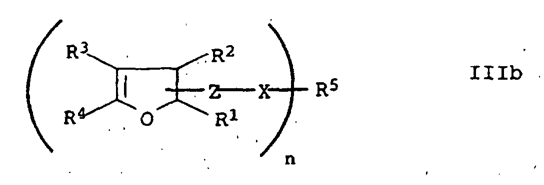 worin R¹, R², R³, R⁴ und X und Z die obengenannte Bedeutung haben, einer der Reste R¹ bis R⁴ entfällt und an dessen Stelle die Bindung an X bzw. Z tritt, n eine Zahl von 2 bis 20, vorzugsweise 2 bis 6, besonders bevorzugt 2 oder 3 ist und R₅ entsprechend ein mehrwertiger Kohlenwasserstoffrest mit 1 bis 20 C-Atomen, insbesondere ein C₁-C₂₀-Alkylrest oder ein C₅-C₂₀-Aryl-, Alkaryl- oder Aralkylrest, welche gegebenenfalls Ethergruppen oder Estergruppen enthalten, ist.

Verbindungen mit 2 oder mehr 2,3- Dihydrofurangrundkörper sind z.B erhältlich durch Umsetzung von Hydroxy-funktionalisierten 2,3 Dihydrofuranen mit mehrfunktionellen Carbonsäuren, Isocyanaten, Epoxiden, Glycidylethern und/oder Chlorameisensäureestern oder erhältlich durch Umsetzung von Carbonsäure-funktionalisierten 2,3 Dihydrofuranen mit mehrfunktionellen Alkoholen, Aminen, Epoxiden, Glycidylethern und/oder Hydrazinen.

Bevorzugte Verbindungen der Formel IIIa mit n=2 sind 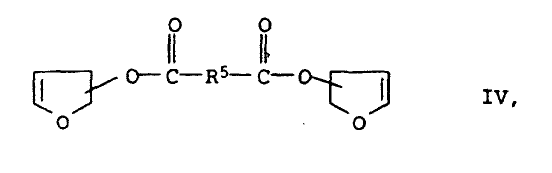 erhältlich z.B. durch Veresterung der entsprechenden durch Hydroxylgruppen substituierten 2,3-Dihydrofurane mit Dicarbonsäuren, Dicarbonsäureestern oder Dicarbonsäurechloriden, 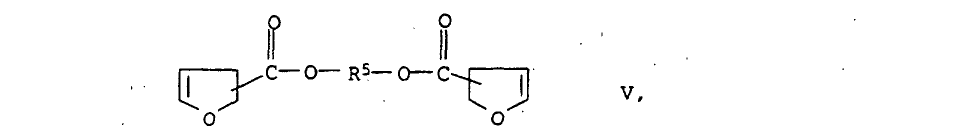 erhältlich durch Veresterung der entsprechenden durch Carboxylgruppen substituierten 2,3-Dihydrofurane mit Diolen, 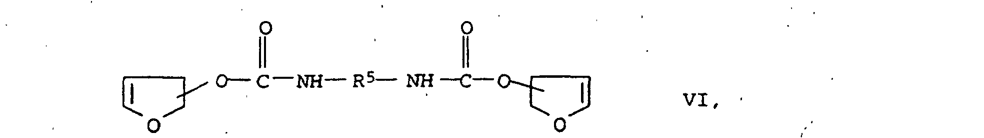 erhältlich durch Umsetzung der entsprechenden durch Hydroxylgruppen substituierten 2,3-Dihydrofurane mit Diisocyanaten, 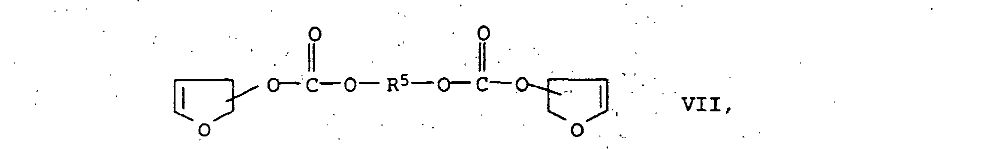 erhältlich durch Umsetzung der entsprechenden durch Hydroxylgruppen substituierten 2,3 Dihydrofurane mit Chlorameisensäureestern von Diolen, 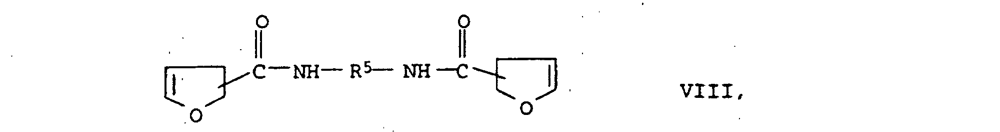 erhältlich durch Umsetzung der entsprechenden durch Carboxylgruppen substituierten 2,3-Dihydrofuranderivate mit Diaminverbindungen, 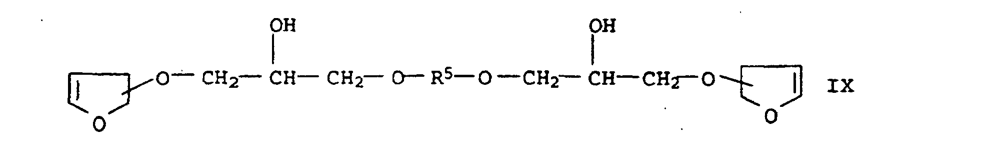 erhältlich durch Umsetzung der entsprechenden durch Hydroxylgruppen substituierten 2,3- Dihydrofurane mit mehrfunktionellen Glycidylethern. 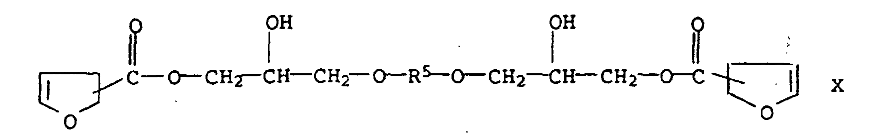 erhältlich durch Umsetzung der entsprechenden durch Carboxylgruppen substituierten 2,3- Dihydrofurane mit mehrfunktionellen Glycidylethern, 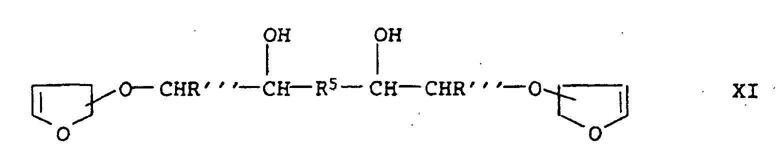 mit R''' = R'
erhältlich durch Umsetzung der entsprechenden durch Hydroxylgruppen substituierten 2,3- Dihydrofurane mit mehrfunktionellen Epoxiden. 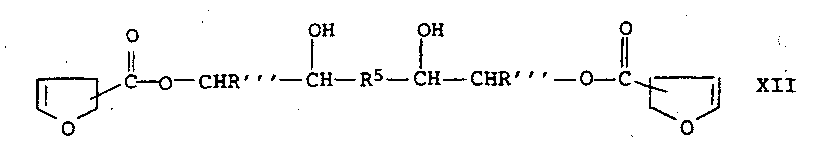 erhältlich durch Umsetzung der entsprechenden durch Carboxylgruppen substituierten 2,3- Dihydrofurane mit mehrfunktionellen Epoxiden.

Eine bevorzugte Verbindung der Formel IIIb ist:

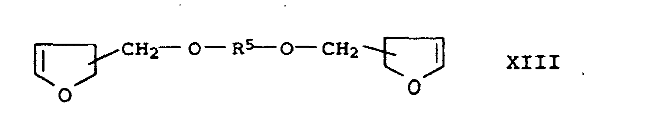

Bevorzugte Verbindungen der Formeln III mit n>2 sind:
n=3: 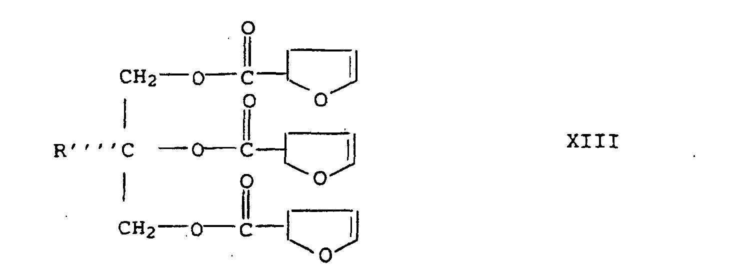 mit R'''' = H, CH₃, CH₂ CH₃
   erhältlich durch Umsetzung von z.B. Glycerin, Trimethylolethan, Trimethylolpropan mit 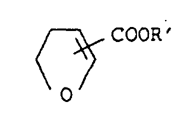
n=4: 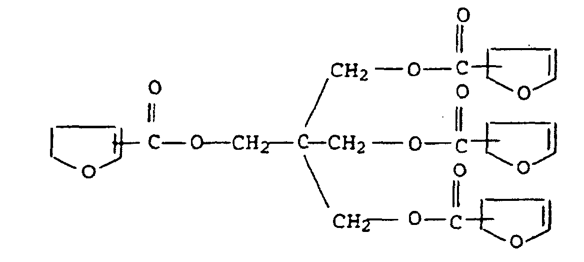 erhältlich durch Umsetzung von Pentaerythrit mit 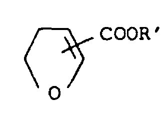 n=6: Veresterungsprodukt von Sorbit (Chemical Abstracts Registriernummer 50-70-4) oder Dipentaerythritol mit 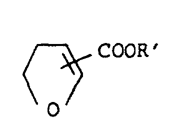
n>6: Veresterungsprodukt von Polyvinylalkohol mit

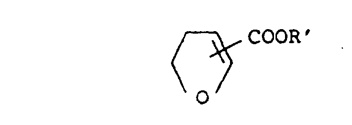

Bevorzugt entfällt in den obigen Formeln IIa, IIb, IIIa, IIIb der Rest R²
und die Bindung zu X bzw. Z tritt an die Stelle von R².

R¹, R³ und R⁴ stehen bevorzugt für ein H-Atom.

X steht bevorzugt für

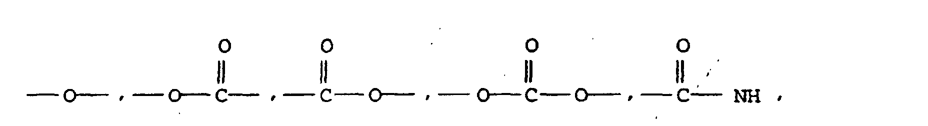

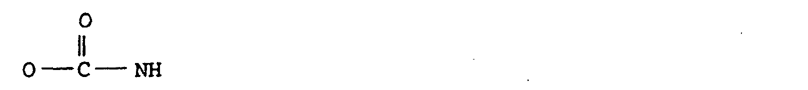

Z steht bevorzugt für eine Einfachbindung (entfällt also) oder für eine Methylengruppe

R⁵ steht bevorzugt für (̵CH₂)̵ₘ mit m = 1-6,

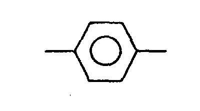

Die Synthese von 2,3-Dihydrofuran oder dessen Derivate mit n=1 ist dem Fachmann bekannt und z.B. in P. Dimroth, H. Pasedach, Angew. Chemie 72, 865 (1960) oder M.A. Gianturco, P. Friedel, V. Flanagan, Tetrahedron Lett., 23, 1847 (1965) beschrieben.

Die beim erfindungsgemäßen Verfahren eingesetzten strahlungshärtbaren Massen enthalten 1 bis 100 Gew.-%, bevorzugt 5 bis 100 besonders bevorzugt 10 bis 100 Gew.-% und ganz besonders bevorzugt 30 bis 100 Gew.-%, bezogen auf die kationisch und gegebenenfalls radikalisch polymerisierbaren Verbindungen, der Verbindungen A).

Insbesondere können aber auch mehr als 50 Gew.-% der kationisch und gegebenenfalls radikalisch polymerisierbaren Verbindungen, Verbindungen A) sein, oder kann sich bei den polymerisierbaren Verbindungen ausschließlich um Verbindungen A) handeln.

Neben Verbindungen A) kommen als weitere kationisch polymerisierbare Verbindungen insbesondere lineare oder cyclische Vinylether, z.B. Vinylmethylether, Vinylethylether, Vinylpropylether, Vinylisobutylether, Vinyloctadecylether, Vinylcyclohexylether, und α-Methyl-Vinylalkylether in Betracht.

Neben Verbindungen A) kommen als weitere kationisch polymerisierbare Verbindungen auch Epoxide, z.B. Cyclopentenoxid, Cyclohexenoxid, epoxidiertes Polybutadien, epoxidiertes Sojabohnenöl, Degacure K 126 oder Glycidylether, z.B Butandioldiclycidether, Hexandiokiglycidether, z.B. Biphenol-A- Diglycidether, Pentaerythritbiglycidylether in Betracht.

Mitverwendet können ebenfalls kationisch polymerisierbare Monomere, wie ungesättigte Aldehyde und Ketone, Diene wie Butandien, Vinylaromaten wie Styrol, N-substituierte Vinylamine wie Vinylcarbazol, cyclische Ether, wie Tetrahydrofuran.

Neben kationisch polymerisierbaren Verbindungen können auch radikalisch polymerisierbare Verbindungen bzw. sowohl radikalisch als auch kationisch polymerisiatore Verbindungen mitverwendet werden. Zu erwähnen sind z.B. Vinylaromaten mit bis zu 20 C-Atomen, Vinylester von Carbonsäuren mit bis zu 20 C-Atomen und insbesondere (Meth)acrylatverbindungen, wie sie z.B. bei R. Holmann U.V. and E.B. Curing Formulation for Printing Inks and Points, London 1984 beschrieben sind.

Neben Monoacrylaten wie z.B. C₁-C₂₀-Alkyl(meth)acrylaten kommen insbesondere auch Verbindungen mit mehreren (Meth)Acrylgruppen in Betracht.

Genannt seien z.B. Trimethylolpropantriacrylat, Dipropylenglykoldiacrylat, Tripropylenglykoldiacrylat, Hexandioldiacrylat oder Polyester-, Polyether-, Epoxid- oder Urethanacrylate.

Bevorzugt sind (Meth)acrylatverbindungen mit 2 bis 6, besonders bevorzugt 2 bis 4 (Meth)acrylgruppen. Das Molgewicht der Acrylatverbindungen liegt vorzugsweise unter 5000, besonders bevorzugt unter 3000 g/mol.

Als radikalisch polymerisierbare Verbindungen kommen auch unge sättigte Polyester in Betracht.

Der Gehalt an radikalisch polymerisierbaren Verbindungen in den strahlungshärtbaren Massen beträgt vorzugsweise 0 bis 99, besonders bevorzugt 0 bis 70 und ganz besonders bevorzugt 0 bis 30 Gew.-%, bezogen auf die Gesamtmenge der kationisch und radikalisch polymerisierbaren Verbindungen.

Die strahlungshärtbaren Massen enthalten vorzugsweise einen Photoinitiator für die Photopolymerisation.

Die Gesamtmenge des Photoinitiators beträgt vorzugsweise 0,1 bis 10, besonders bevorzugt 0,5 bis 5 Gew.-%, bezogen auf die Gesamtmenge der kationisch und gegebenenfalls radikalisch polymerisierbaren Verbindungen.

Photoinitiatoren für die kationische Photopolymerisation liefern bei Bestrahlung mit UV-Licht Säuren, genannt seinen z.B. Aryldiazonium-, Aryliodonium- oder Arylsulfoniumsalze, Disulfone, Diazodisulfone, Imido-triflate, Benzointosylate folgender Strukturen:

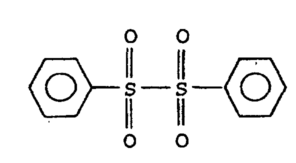

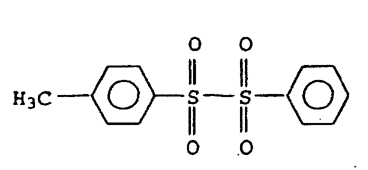

Beispielhaft seien weiterhin p-Methoxybenzoldiazoniumhexafluorophosphat, Benzoldiazoniumtetrafluoroborat, Toluoldiazoniumtetrafluoroarsenat, Diphenyliodoniumhexafluoroarsenat, Triphenylsulfoniumhexafluorophosphat, Benzolsulfoniumhexafluorophosphat, Toluolsulfoniumhexafluorophosphat oder Degacure KI85 (Bis[4-diphenylsulfonio-phenyl] sulfid-bis-hexafluorophosphat), Isochinoliniumsalze, Phenylpyridiniumsalze oder Picoliniumsalze, wie z.B. M-Ethoxy-isochinoliniumhexafluorophosphat, N-Ethoxy-4-phenylpyridiniumhexafluorophosphat oder N-Ethoxy-2-picoliniumhexafluorophosphat genannt. Auch Ferroceniumsalze (z.B. Irgacure 261 von Ciba) oder Titanocene sind geeignet.

Soweit die strahlungshärtbaren Massen auch radikalisch polymerisierbare Verbindungen enthalten, werden entsprechend dem Gehalt dieser Verbindungen bevorzugt auch Photoinitiatoren für die radikalische Photopolymerisation mitverwendet.

Möglich ist auch die ausschließliche Verwendung von Photoinitiatoren für die radikalische Polymerisation, insbesondere wenn der Anteil der radikalisch polymerisierbaren Verbindungen größer 30 Gew.-%, bezogen auf die Gesamtmenge der polymerisierbaren Verbindungen ist.

Als Photoinitiatoren für die radikalische Polymerisation in Betracht kommen z.B. Benzophenon und Derivate davon, wie z.B. Alkylbenzophenone, halogenmethylierte Benzophenone, Michlers Keton sowie Benzoin und Benzoinether wie Ethylbenzoinether. Benzilketale wie Benzildimethylketal, Acetonphenonderivate wie z.B. Hydroxy-2-methyl-1-phenylpropan-l-on und Hydroxycyclohexylphenylketon. Anthrachinon und seine Derivate wie Methylanthrachinon und insbesondere Acylphosphinoxide wie z.B. Lucirin TPO (2,4,6-Trimethylbenzoyldiphenylphosphinoxid) und Bisacylphosphinoxide.

Die strahlungshärtbaren Massen werden zur Herstellung von Beschichtungen auf die zu beschichtenden Substrate, z.B. aus Holz, Papier, Kunststoff oder Metall aufgebracht oder zur Herstellung von Formkörpern in die vorgesehene Form gebracht.

Die strahlungshärtbaren Massen können dabei die für den jeweiligen Verwendungszweck üblichen Zusatzstoffe enthalten.

Bei der Verwendung als Beschichtungsmittel können das z.B. Verlaufsmittel, Verstärker, Pigmente oder Füllstoffe sein.

Die Strahlungshärtung erfolgt vorzugsweise mit UV-Licht. Geeignet sind dazu z.B. UV-Strahler mit einem Wellenlängenbereich von 240 bis 400 nm und einer Leistung von 50 bis 240 W/cm.

Besonders bevorzugt eignen sich die strahlungshärtbaren Massen zur Herstellung von Beschichtungen auf Holz, Kunststoff, Papier, Metall, wobei sie durch Elektronenstrahlen oder nach Zusatz von Photoinitiatoren durch UV Strahlung vernetzt, d.h. gehärtet werden und Beschichtungen ergeben, die den Anforderungen an Schutz-überzüge oder dekorative Überzuge gerecht werden.

Die strahlungshärtbaren Massen haben eine hohe Reaktivität, d.h. hohe Härtungsgeschwindigkeit bei der Strahlungshärtung.

Die erhaltenen Beschichtungen bzw. Formkörper zeigen gute anwendungstechnische Eigenschaften.

### Beispiele

### Beispiel 1

2,3-Dihydrofuran und Irgacure® 261 als Photoinitiator wurden in Methylenchlorid gelöst. Die Konzentration des Monomeren betrug 3 mol/l, die des Initiators 10 mmol/l. Die Reaktionslösung wurde bei Raumtemperatur mit einer Quecksilber/Xenon-Dampflampe bestrahlt und anschließend in einer ammoniakalischen Methanollösung gefällt. Die Reaktion verlief unter heftiger Wärmetönung. Der Umsatz betrug nach 15 Sekunden 15 %, ein vollständiger Umsatz wurde in weniger als 120 Sekunden erzielt. Das erhaltene Polymer ist farblos und transparent, der mittlere Polymerisationsgrad Pₙ betrug 220 bei einer Einheitlichkeit M_{w}/Mₙ von 1,8.

### Beispiel 2

Benzo(b)furan und Irgacure 261 wurden in Methylenchlorid gelöst. Die Konzentration des Monomeren betrug 3 mol/l, die des Initiators 10 mmol/l. Als interner Standard für die Gaschromatographie wurde Toluol verwendet. Die Reaktionslösung wurde bei Raumtemperatur mit einer Quecksilber/Xenon-Dampflampe bestrahlt und anschließend in einer ammoniakalischen Methanollösung gefällt. Der Umsatz betrug nach 5 Minuten 76 %; das erhaltene Polymer stellt sich als ein dunkles amorphes Pulver dar.

### Beispiel 3

2,3-Dihydrofuran, Ethylacrylat und Lucirin TPO wurden in Toluol gelöst. Die Konzentration der Monomeren betrug jeweils 1,5 mol/l, die des Initiators 10 mmol/l. Die Reaktionslösung wurde bei Raumtemperatur mit einer Quecksilber/Xenon-Dampflampe bestrahlt und anschließend in Methanol gefällt. Das erhaltene Polymer ist glasklar, farblos und von sehr zäher Konsistenz. Das Verhältnis von Vinylether zu Acrylat im Copolymer betrug 1:3. Der mittlere Polymerisationsgrad Pₙ betrug 23.

### Beispiel 4

Polymerisation von 2,3-Dihydrofuran mit Benzol-1,4-dimethyl((2,3-dihydrofuran-3-yl)-2-ethyl)ether 741 mg 2,3-Dihydrofuran (5,714 mol/l), 160 mg Benzol-1,4-dimethyl((2,3-dihydrofuran-3-yl)-2-ethyl)ether (0,286 mol/l) (6 mol/l Gesamtkonzentration) und 5,2 mg N-Ethoxy-2-picolinium-hexaflurophosphat (10 mmol/l) werden mit Methylenchlorid auf 1,85 ml aufgefüllt und gelöst.

Der Ansatz wird 15 Minuten bestrahlt und das vernetzte Produkt 48 Stunden im Vakuum bei 60°C getrocknet.

IR (KBr-Preßling; cm⁻¹): 2942, 2865, 1452, 1362, 1214, 1072, 842, 698

### Vergleichsbeispiel 1

3,4-Dihydro-2H-pyran und Irgacure 261 wurden in Methylenchlorid gelöst. Die Konzentration der Monomeren betrug 3 mol/l, die des Initiators 10 mmol/l. Die Reaktionslösung wurde bei Raumtemperatur mit einer Quecksilber/Xenon-Dampflampe bestrahlt und anschließend in einer ammoniakalischen Methanollösung gefällt. Der Umsatz betrug nach 5 Minuten 9 %, nach 6,5 Minuten 44 % und nach einer Stunde 93 %. Das erhaltene Polymer ist farblos und transparent, der mittlere Polymerisationsgrad Pₙ betrug 24 bei einer Einheitlichkeit M_{w}/Mₙ von 1,5.

### Vergleichsbeispiel 2

Beispiel 1 wurde wiederholt, wobei jedoch ausschließlich Ethylacrylat und keine kationisch polymerisierbaren Verbindungen mitverwendet wurden. Als Initiator wurde Lucirin TPO verwendet. Als Lösemittel wurde Toluol statt Methylenchlorid eingesetzt. Der Umsatz betrug 80 % nach 15 Minuten.

### Lackbeispiele:

### Kationische Härtung:

A) Eine Mischung aus 5,5 Teilen eines cycloaliphatischen Diepoxids (Degacure K126, Degussa), 2,5 Teilen eines Polycaprolactons (Capa 305 von Solvay Inerox, OH-Zahl 310), 2,0 Teilen Butandioldigylcidether (Araldit DY 026 SP, Ciba Geigy) und 0,3 Teilen einer 33 %igen Lösung von Bis[4-(diphenylsulfonio)phenyl]sulfid-bis-hexafluorphosphat in Propylencarbonat (Degacure KI 85, Degussa) wird in einer Schichtdicke von 100 µm (nass) aufgerakelt und mit UV-Licht (2x80 W/cm) mit einer Bandgeschwidigkeit von 15 m/min bestrahlt und anschließend 10 min bei 160°C nachgehärtet.
B) wie A) jedoch mit Zusatz von 2,0 Teilen 2,3-Dihydrofuran.
C) wie A) jedoch mit Zusatz von 2,0 Teilen 3,5-Dihydro-2H-pyran.

Anwendungstechnische Prüfungen:

Die Pendelhärte wurde nach DIN 53157 bestimmt und ist ein Maß für die Härte der Beschichtung. Die Angabe erfolgt in Sekunden (S), wobei hohe Werte, hohe Härte bedeuten.

Die Erichsentiefung wurde nach DIN 53156 bestimmt und ist ein Maß für die Flexibilität, Elastizität. Die Angabe erfolgt in Millimeter (mm), wobei hohe Werte, hohe Flexibilität bedeuten.

Die Haftung der 3eschichtung auf Untergründen wurde mit dem Gitterschnitt - test nach DIN 53151 bestimmt. Niedrige Werte geben eine gute Haftung an.

| Ergebnisse Film | Pendelhärte[s] | Erichsentiefung[mm] | Haftung mit Gitterschnitt/Tesa-Test (zwei Prüfungen) |
|---|---|---|---|
| A | 176 | 6,5 | 1/2 |
| B | 140 | 7,1 | 1/1 |
| C | 120 | 7,5 | 1/2 |

### Kombinierte radikalische/kationische Härtung

D) 100 Teile eines Polyesteracrylates (Laromer® Pe 55 F, BASF) werden mit 4 Teilen eines Photoinitiators (Irgacure 500, Ciba Geigy) vermischt und unter UV-Licht (2x80 W/cm) mit einer Bandgeschwindigkeit von 6,5 m/min bestrahlt.
E) Analog D) unter Zusatz von 20 Teilen 2,3-Dihydrofuran und 2 Teilen Degacure KI 85 (Degussa)
F) Analog B) unter Zusatz von 20 Teilen 3,5-Dihydro-2H-pyran und 2 Teilen Degacure KI 85 (Degussa)

Ergebnisse:

| Ergebnisse Film | Pendelhärte [s] | Erichsentiefung [mm] | Haftung mit Gitterschnitt/Tesa- Test |
|---|---|---|---|
| D | 125 | 5,6 | 1/2-3 |
| E | 117 | 5,8 | 0/1 |
| F | 95 | 5,7 | 0/0 |

Der Ansatz E besitzt das beste Eigenschaftsprofil, gute Härte bei hoher Flexibilität und sehr guter Haftung.

### Synthese beispiele

### S1: Synthese von 3-(Hydroxymethyl)-2,3 Dihydrofuran

a) Die Synthese erfolgt zunächst durch Birch Reduktion von Furan-3-carbonsäure und anschließende Veresterung mit Benzylbromid zu 2,3 Dihydrofuran-3 carbonsäurebenzylester ( nach G. Lowe, St. Swain; J. Chem. Soc. Perkin Trans I (1985), 391) 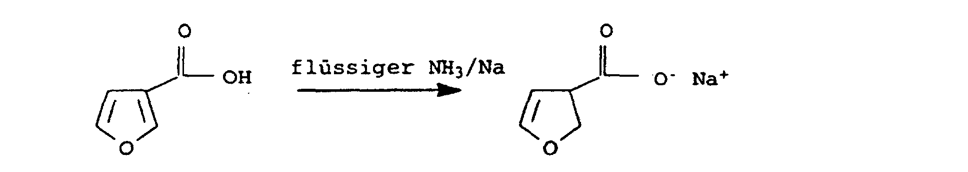 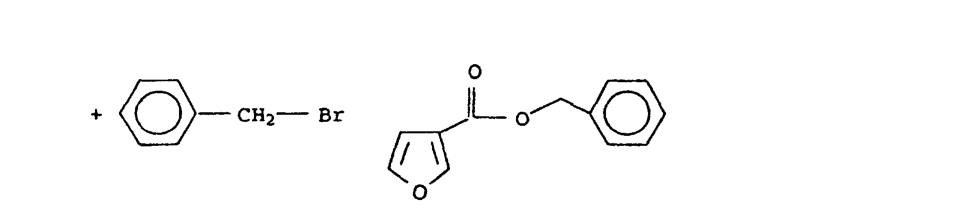
b) Das Endprodukt aus a) wird mit Lithiumaluminiumhydrid reduziert zu 3 Hydroxymethyl-2,3-dihydrofuran

### Durchführung

1,5 mmol Lithiumaluminiumhydrid werden in 5 ml absolutem Diethylether vorgelegt und eine Lösung von 2,65 mmol 2,3-Dihydrofuran-3-carbonsäurebenzylester zugetropft. Der Ansatz wird 4 Stunden bei Raumtemperatur gerührt und anschließend vorsichtig Wasser zugetropft. Die organische Phase wird dekantiert, und der wäßrige Rückstand mit Ether ausgewaschen. Die vereinigten organischen Phasen werden über Natriumsulfat getrocknet und das Lösungsmittel am Rotationsverdampfer abdestilliert.

Das Rohprodukt wird durch Säulenchromatographie gereinigt (Eluent: Diethylether).

Ausbeute: 76 % d. Th.

¹H-NMR (CDCl₃; ppm): 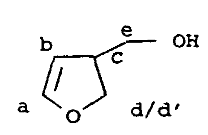 3,2 (c 1H); 3,6 (e 2H); 4,2 und 4,4 (d und d' 2H); 4,9 (b 1H); 6,4 (a 1H)

IR (Film, cm⁻¹) : 3397, 3102, 2948, 2885, 1614, 1139, 1091, 1037, 984, 934, 905, 725

### S2: Synthese von Benzol 1,4-dimethyl ((2,3 dihydrofuran-3-yl)-2 ethyl)ether

Schmelzpunkt: 58,5°C ¹H-NMR (CDCl₃; PPm) : 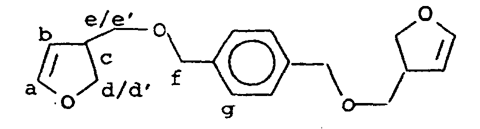 3,2 (c 2H); 3,4 und 3,5 (e und e' 4H); 4;2 und 4,3 (d und d' 4H); 4,5 (f 4H); 4,9 (b 2H); 6,4 (a2 H; 7,3 (g 4H)

¹³C-NMR (CDCl₃; ppm) : 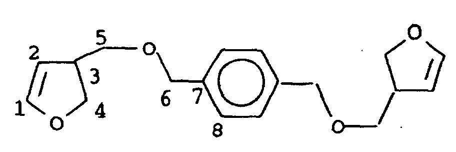 43 (3); 73 (3 gerade noch aufgelöste Signale) (4), (5) und (6); 101 (2); 128 (8); 138 (7); 147 (1)

IR (Film, cm⁻¹) : 3090, 3029, 2951, 2858, 1612, 1358, 1138, 1092, 722

22,9 mmol 3-Hydroxymethyl-2,3-dihydrofuran und 7,6 mmol 1,4-Dibrommethylbenzol werden bei 0°C vorgelegt, und nacheinander 3,9 g 50 %ige Kaliumhydroxidlösung und 80 mg Tetrabutylammoniumbromid zugegeben.

Es bildet sich eine weiße pastöse Masse, die einen Tag bei Raumtemperatur gerührt wird. Die Emulsion wir ausgeethert, und die organische Phase mit Wasser gewaschen. Die organische Phase wird über Natriumsulfat getrocknet, und das Lösungsmittel am Rotationsverdampfer abdestilliert. Das Rohprodukt wird durch Säulenchromatographie gereinigt (Eluent: Essigsäureethylester/n-Hexan 1/10)

## Patentansprüche

1. Verfahren zur Herstellung von Beschichtungen oder Formkörpern durch Strahlungshärtung, **dadurch gekennzeichnet, daß** strahlungshärtbare Massen, welche 1 bis 100 Cew.-%, bezogen auf die Gesamtmenge der kationisch und gegebenenfalls radikalischen polymerisierbaren Verbindungen, Verbindungen A) mit mindestens einem kationisch polymerisierbaren 2,3-Dihydrofurangrundkörper enthalten, mit energiereichem Licht bestrahlt werden.

2. Verfahren gemäß Anspruch 1, **dadurch gekennzeichnet, daß** es sich bei Verbindungen A) um Verbindungen mit 1 bis 6 kationisch polymerisierbaren 2,3- Dihydrofurangrundkörpern und einem Molgewicht unter 1000 g/mol handelt.

3. Verfahren gemäß Anspruch 2, **dadurch gekennzeichnet, daß** die Verbindungen A) mindestens eine der folgenden Gruppierungen enthalten: 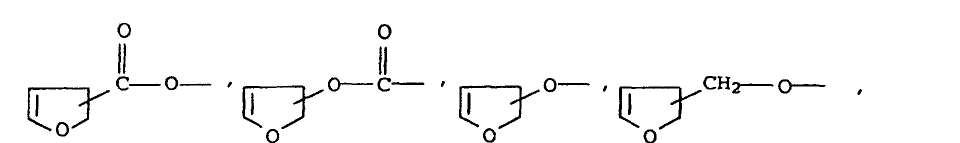 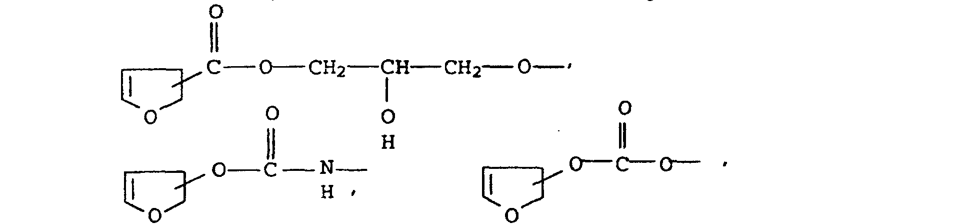 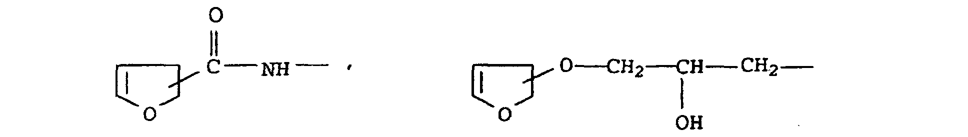 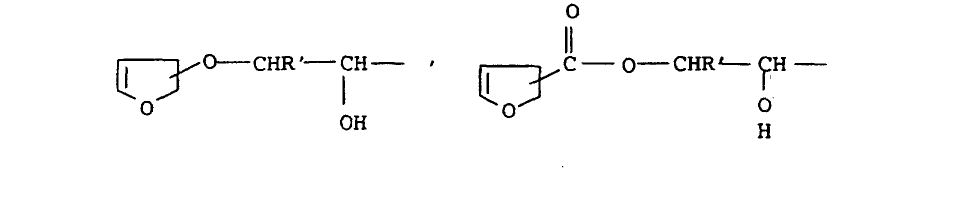 wobei R' folgende Bedeutung hat: H-Atom, organischer Rest mit 1-20 C-Atomen, insbesondere ein C₁-C₂₀ aliphatischer Rest oder ein C₅-C₂₀ Aryl-, -Alkaryl -oder -Aralkylrest

4. Verfahren gemäß einen der Ansprüche 1 bis 3, **dadurch gekennzeichnet, daß** es sich bei Verbindungen A) um 2,3- Dihydrofuran handelt.

5. Verfahren gemäß einem der Ansprüche 1 bis 4, **dadurch gekennzeichnet, daß** der Anteil der Verbindungen A) 20 bis 100 Gew.-%, bezogen auf die Gesamtmenge der kationisch und gegebenenfalls radikalisch polymerisierbaren Verbindungen beträgt.

6. Strahlungshärtbare Massen, enthaltend 1 bis 100 Gew.-%, bezogen auf die Gesamtmenge der kationisch und gegebenenfalls radikalisch polymerisierbaren Verbindungen, Verbindungen A) mit mindestens einem kationisch polymerisierbaren 2,3- Dihydrofurangrundkörper und einen Fotoinitiator für die kationische und/oder radikalische Polymerisation.

7. Verwendung von strahlungshärtbaren Massen gemäß Anspruch 6 zur Herstellung von Beschichtungen oder Formkörpern.

8. Verbindungen mit zwei oder mehr als zwei 2,3- Dihydrofurangrundkörpern, erhältlich durch Umsetzung von Hydroxy-funktionalisierten 2,3 Dihydrofuranen mit mehrfunktionellen Carbonsäuren, Isocyanaten, Epoxiden, Glycidylethern und/oder Chlorameisensäureestern.

9. Verbindungen mit zwei oder mehr als zwei 2,3- Dihydrofurangrundkörpern, erhältlich durch Umsetzung von Carbonsäurefunktionalisierten 2,3 Dihydrofuranen mit mehrfunktionellen Alkoholen, Aminen, Epoxiden, Glycidylethern und/oder Hydrazinen.

10. Verbindungen mit zwei oder mehr als zwei 2,3- Dihydrofurangrundkörpern, erhältlich durch Veretherung von 3-Hydroxymethyl)-2,3-dihydrofuran mit halogensubstituierten Kohlenwasserstoffen.

## Claims

1. A process for producing coatings or moldings by radiation curing, which comprises using high-energy light to irradiate radiation-curable compositions containing 1-100 % by weight, based on the total amount of cationically and, if desired, free-radically polymerizable compounds, of compounds A) containing at least one cationically polymerizable 2,3-dihydrofuran parent structure.

2. A process as claimed in claim 1, wherein compounds A) are compounds containing 1-6 cationically polymerizable 2,3-dihydrofuran parent structures and a molecular weight of below 1000 g/mol.

3. A process as claimed in claim 2, wherein the compounds A) include at least one of the following groups: 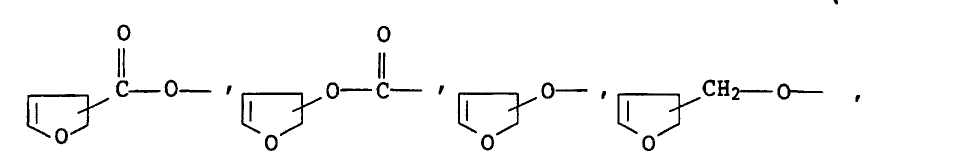 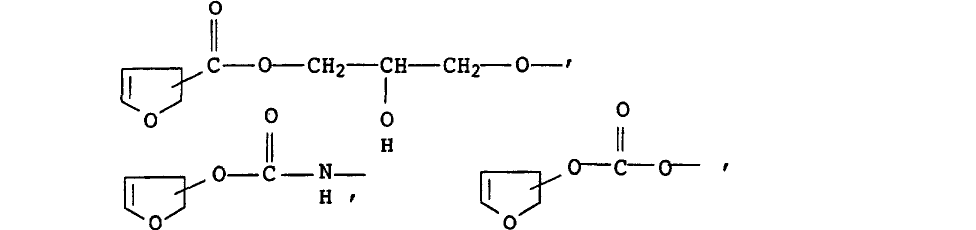 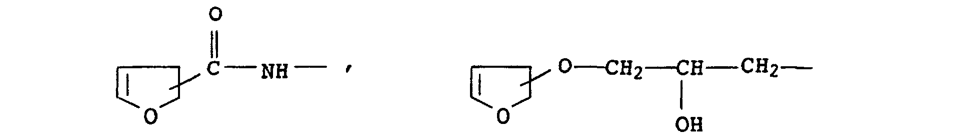 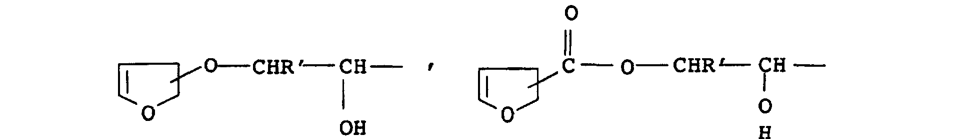 where R' is H or an organic radical of 1-20 carbons, in particular a C₁-C₂₀ aliphatic radical or C₅-C₂₀-aryl, -alkaryl or -aralkyl.

4. A process as claimed in any one of claims 1 to 3, wherein compound A) is 2,3-dihydrofuran.

5. A process as claimed in any one of claims 1 to 4, wherein the proportion of compounds A) is 20-100 % by weight, based on the total amount of cationically and, if present, free-radically polymerizable compounds.

6. A radiation-curable composition comprising 1-100 % by weight, based on the total amount of cationically and, if present, free-radically polymerizable compounds and of compounds A) containing at least one cationically polymerizable 2,3-dihydrofuran parent structure and a photoinitiator for the cationic and/or free-radical polymerization.

7. The use of a radiation-curable composition as claimed in claim 6 for producing coatings or moldings.

8. A compound having two or more 2,3-dihydrofuran parent structures, obtainable by reacting hydroxy-functionalized 2,3-dihydrofurans with polyfunctional carboxylic acids, isocyanates, epoxides, glycidyl ethers and/or chloroformates.

9. A compound having two or more 2,3-dihydrofuran parent structures, obtainable by reacting carboxy-functionalized 2,3-dihydrofurans with polyfunctional alcohols, amines, epoxides, glycidyl ethers and/or hydrazines.

10. A compound having two or more 2,3-dihydrofuran parent structures, obtainable by etherifying 3-hydroxymethyl-2,3-dihydrofuran with halosubstituted hydrocarbons.

## Revendications

1. Procédé de préparation de revêtements ou de corps moulés au moyen d'un durcissement par rayonnement, **caractérisé en ce que** les masses durcissables par rayonnement, lesquelles contiennent de 1% à 100% en poids, par rapport à la quantité totale des composés polymérisables par voie cationique et éventuellement par voie radicalaire, de composés A) présentant au moins un groupe principal 2,3-dihydrofuranne polymérisable par voie cationique, sont irradiées avec une lumière riche en énergie.

2. Procédé selon la revendication 1, **caractérisé en ce que** les composés A) sont des composés présentant de 1 à 6 groupes principaux 2,3-dihydrofuranne polymérisables par voie cationique et une masse moléculaire inférieure à 1 000 g/mole.

3. Procédé selon la revendication 2, **caractérisé en ce que** les composés A) contiennent au moins un des groupes suivants : 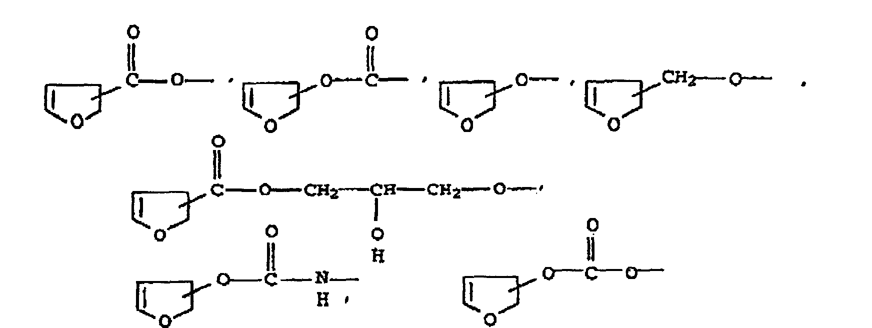 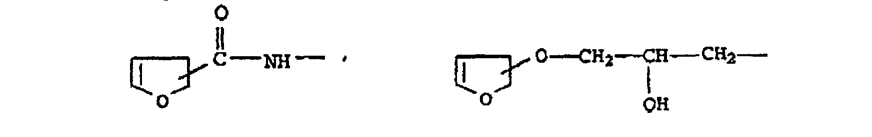 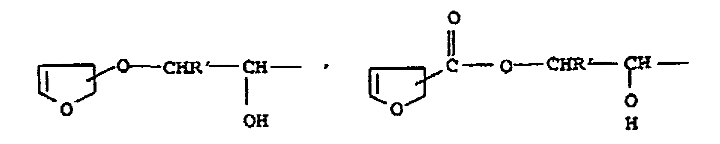 dans lesquels R' a la signification suivante : un atome d'hydrogène, un groupe organique présentant de 1 à 20 atomes de carbone, en particulier un groupe aliphatique en C₁ à C₂₀ ou un groupe aryle, alkaryle ou aralkyle en C₅ à C₂₀.

4. Procédé selon l'une quelconque des revendications 1 à 3, **caractérisé en ce que** les composés A) sont le 2,3-dihydrofuranne.

5. Procédé selon l'une quelconque des revendications 1 à 4, **caractérisé en ce que** la proportion de composés A) représente de 20% à 100% en poids, par rapport à la quantité totale des composés polymérisables par voie cationique et éventuellement par voie radicalaire.

6. Masses durcissables par rayonnement, contenant de 1% à 100% en poids, par rapport à la quantité totale des composés polymérisables par voie cationique et éventuellement par voie radicalaire, de composés A) présentant au moins un groupe principal 2,3-dihydrofuranne polymérisable par voie cationique, et un photoamorceur pour la polymérisation par voie cationique et/ou par voie radicalaire.

7. Utilisation des masses durcissables par rayonnement selon la revendication 6 pour la préparation de revêtements ou de corps moulés.

8. Composés présentant deux ou plus de deux groupes principaux 2,3-dihydrofuranne, pouvant être obtenus au moyen d'une réaction des 2,3-dihydrofurannes fonctionnalisés par un groupe hydroxy avec des acides carboxyliques, des isocyanates, des époxydes, des éthers glycidyliques et/ou des chloroformiates polyfonctionnels.

9. Composés présentant deux ou plus de deux groupes principaux 2,3-dihydrofuranne, pouvant être obtenus au moyen d'une réaction des 2,3-dihydrofurannes fonctionnalisés par un acide carboxylique avec des alcools, des amines, des époxydes, des éthers glycidyliques et/ou des hydrazines polyfonctionnels.

10. Composés présentant deux ou plus de deux groupes principaux 2,3-dihydrofuranne, pouvant être obtenus au moyen d'une éthérification du 3-hydroxyméthyl-2,3-dihydrofuranne avec des hydrocarbures substitués par un atome d'halogène.
